# EUROPEAN PATENT SPECIFICATION

(11) **EP 2 175 357 B1**
(45) Date of publication and mention of the grant of the patent: **21.11.2012**
(21) Application number: 08166165.4
(22) Date of filing: 08.10.2008
(51) Int. Cl.: G06F 3/048, G06F 3/041

(54) **Portable electronic device and method of controlling same**
Tragbare elektronische Vorrichtung und Steuerverfahren dafür
Dispositif électronique portable et son procédé de contrôle

(43) Date of publication of application: 14.04.2010
(73) Proprietor: Research In Motion Limited, Waterloo, ON N2L 3W8 (CA)
(72) Inventor: Kwok, Jordanna, Waterloo, Ontario N2V 2Y1 (CA)
(74) Representative: Fennell, Gareth Charles

(56) References cited:
- US-A- 5 523 775
- US-A- 6 118 435
- US-A1- 2004 174 399

## Description

The present disclosure relates generally to a portable electronic device including a touch screen display and control of the electronic device.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Portable electronic devices such as PDAs or smart telephones are generally intended for handheld use and ease of portability. Smaller devices are generally desirable for portability. A touch screen display for input and output is particularly useful on such handheld devices as such handheld devices are small and are therefore limited in space available for user input and output devices. Further, the screen content on the touch screen display devices can be modified depending on the functions and operations being performed. Even still, these devices have a limited area for rendering content on the touch screen display and for rendering features or icons, for example, for user interaction. With continued demand for decreased size of portable electronic devices, touch screen displays and available space on the portable electronic device for additional input devices continue to decrease in size.

Improvements in touch screen devices are therefore desirable.

US2004/174399 discloses a computer with a touch screen in which a user can execute "undo", "cut", "copy" and "paste" editing commands by a continuous stroke movement to increase the input operational efficiency. For example, after marking an area on the screen, if the subsequent stroke is moved downwards, the "cut" operation is performed, and if the subsequent stroke is moved upwards, the "copy" operation is performed. Furthermore, when the user stops the stroke at a predetermined position, if the subsequent stroke is moved towards the right, the "paste" operation is performed, and if the subsequent stroke is moved towards the left, the "undo" operation is performed.

### GENERAL

According to one aspect, there may be provided a method of controlling an electronic device having a touch screen display, the touch screen display being movable relative to a base of the electronic device. The method may comprise displaying selectable text on the touch screen display, detecting a touch event on the touch screen display, detecting actuation of a switch caused by movement of the touch screen display toward the base during the touch event and determining a first location of touch at the time of actuation, detecting release of the switch and determining a second location of touch at the time of release of the switch, and selecting text displayed on the touch screen display between first location of touch and the second location of touch.

According to another aspect, there may be provided a portable electronic device. The portable electronic device may comprise a base, a touch screen display moveable relative to the base, a switch disposed between the touch screen display and the base and actuatable as a result of movement of the touch screen display toward the base, and a processor connected to the touch screen display and the switch, and a memory device for storage of computer-readable program code executable by the processor. The computer-readable program code may be executable by the processor for displaying selectable text on the touch screen display, detecting a touch event on the touch screen display, detecting actuation of a switch caused by movement of the touch screen display toward the base during the touch event and determining a first location of touch at a time of actuation, detecting release of the switch and determining a second location of touch at a time of release of the switch, and selecting text displayed on the touch screen display between the first location of touch and the second location of touch.

According to yet another aspect, there may be provided a computer-readable medium having computer-readable code embodied therein for execution by a processor of a portable electronic device comprising a touch screen display. The computer-readable code may be executable by the processor for displaying selectable text on the touch screen display, detecting a touch event on the touch screen display, detecting actuation of a switch caused by movement of the touch screen display toward a base of the portable electronic device during the touch event and determining a first location of touch at a time of actuation, detecting release of the switch and determining a second location of touch at a time of release of the switch, and selecting text displayed on the touch screen display between the first location of touch and the second location of touch.

### BRIEF DESCRIPTION OF THE DRAWINGS

Embodiments of the present disclosure will now be described, by way of example only, with reference to the attached Figures, wherein
Figure 1 is a block diagram of a portable electronic device according to one example;
Figure 2 is a simplified sectional side view of the portable electronic device of Figure 2 (not to scale), with a switch shown in a rest position;
Figure 3 is a flow chart showing a method for controlling an electronic device according to an embodiment; and
Figures 4 to 6 are front views of an exemplary portable electronic device illustrating a GUI for user interaction in accordance with the method of Figure 3.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a portable electronic device including a touch screen display and control of the portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

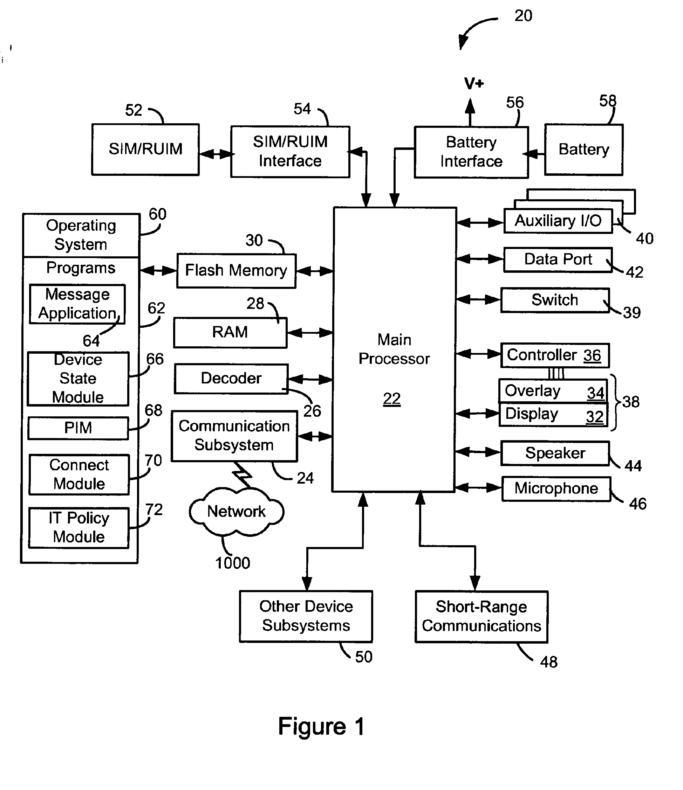

Referring first to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards such as Enhanced Data GSM Environment (EDGE) and Universal Mobile Telecommunications Service (UMTS) are believed to have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 that together make up a touch screen display 38, an electronic controller 36 connected to the touch-sensitive overlay 34, a switch 39, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. The PIM application has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary I/O subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

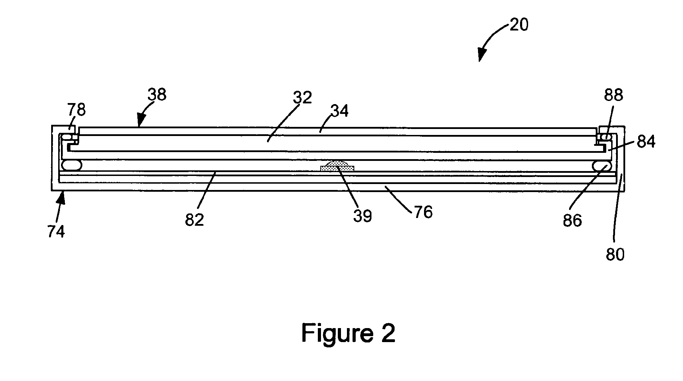

Reference is now made to Figure 2, which shows a simplified sectional side view of the portable electronic device 20. The portable electronic device 20 includes a housing 74 that houses the internal components that are shown in Figure 1 and frames the touch screen display 38 such that the touch screen display 38 is exposed for user-interaction therewith when the portable electronic device 20 is in use.

The housing 74 includes a back 76, a frame 78, which frames the touch screen display 38, sidewalls 80 that extend between and generally perpendicular to the back 76 and the frame 78, and a base 82 that is spaced from and generally parallel to the back 76. The base 82 can be any suitable base and can include, for example, a printed circuit board or flex circuit board. The back 76 includes a plate (not shown) that is releasably attached for insertion and removal of, for example, the battery 58 and the SIM/RUIM card 52 described above. It will be appreciated that the back 76, the sidewalls 80 and the frame 78 can be injection molded, for example. In the exemplary portable electronic device 20 shown in Figure 2, the frame 78 is generally rectangular with rounded corners although other shapes are possible.

The display 32 and the touch-sensitive overlay 34 can be supported on a support tray 84 of suitable material such as magnesium for providing mechanical support to the display 32 and touch-sensitive overlay 34. The display 32 and touch-sensitive overlay 34 are biased away from the base 82, toward the frame 78 by biasing elements 86 such as gel pads between the support tray 84 and the base 82. Compliant spacers 88, which can also be in the form of gel pads for example, are located between an upper portion of the support tray 84 and the frame 78. The touch screen display 38 is moveable within the housing 74 as the touch screen display 38 can be moved toward the base 82, thereby compressing the biasing elements 86. The touch screen display 38 can also be pivoted within the housing 74 with one side of the touch screen display 38 moving toward the base 82, thereby compressing the biasing elements 86 on the same side of the touch screen display 38 that moves toward the base 82.

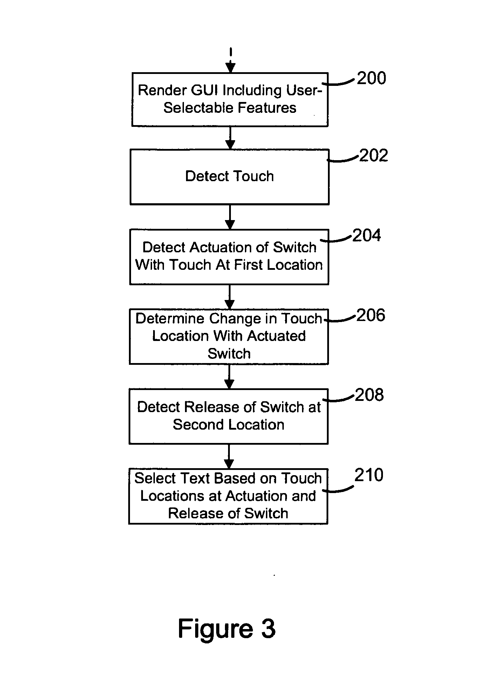

In the present example, the switch 39 is supported on one side of the base 82 which can be printed circuit board while the opposing side provides mechanical support and electrical connection for other components (not shown) of the portable electronic device 20. The switch 39 can be located between the base 82 and the support tray 84. The switch 39, which can be a mechanical dome-type switch, for example, can be located in any suitable position such that displacement of the touch screen display 38 resulting from a user pressing the touch screen display 38 with sufficient force to overcome the bias and to overcome the actuation force for the switch 39, depresses and actuates the switch 39. In the present embodiment the switch 39 is in contact with the support tray 84. Thus, depression of the touch screen display 38 by user application of a force thereto, causes actuation of the switch 39, thereby providing the user with a positive tactile quality during user interaction with the user interface of the portable electronic device 20. The switch 39 is not actuated in the rest position shown in Figure 3, absent applied force by the user. It will be appreciated that the switch 39 can be actuated by pressing anywhere on the touch screen display 38 to cause movement of the touch screen display 38 in the form of movement parallel with the base 82 or pivoting of one side of the touch screen display 38 toward the base 82. The switch 39 is released from actuation upon removal of the force sufficient to cause movement of the touch screen display 38 toward the base 82. The switch 39 is connected to the processor 22 and can be used for further input to the processor when actuated and when released. Thus, the processor 22 can detected when the switch 39 is actuated and when it is released. Although a single switch is shown any suitable number of switches can be used and can be located in any suitable position. Further, a multiple dome switch or switches can be used and can be located in any suitable position.

The touch screen display 38 can be any suitable touch screen display such as a capacitive touch screen display, resistive touch screen display or any other suitable touch screen display. A capacitive touch screen display 38, for example, includes the display 32 and the touch-sensitive overlay 34, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

In the present example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touch screen display 38 can be determined. For example, the size and the shape of the touch on the touch screen display 38 can be determined in addition to the location (X and Y values) based on the signals received at the controller 36 from the touch sensor layers.

Reference is now made to Figure 3 to describe a method of controlling the portable electronic device 20 in accordance with one embodiment. It will be appreciated that the steps of Figure 3 can be carried out by routines or subroutines of software executed by the processor 22. Coding of software for carrying out such steps is well within the scope of a person of ordinary skill in the art having regard to the present description.

In general, the method of controlling the portable electronic device 20 that has the touch screen display 38 that is moveable relative to a base thereof includes rendering a graphical user interface including selectable text (step 200), detecting a touch event on the touch screen display (step 202), detecting actuation of a switch caused by movement of the touch screen display relative to the base during the touch event and determining a first location of touch at the time of actuation (step 204), determining a change in the touch location with the switch actuated (step 206), detecting release of the switch and determining a second location of touch at the time of release of the switch (step 208), and selecting text from the first location of touch to the second location of touch (step 210).

A graphical user interface is displayed on the display 32 and includes text (step 200). For the purpose of the present disclosure, text can include any characters including words, letters, numerals, punctuation, or symbols, for example. The graphical user interface can be provided in any suitable application, such as the message application 64 or any other suitable application.

A touch on the touch screen display 38 is detected (step 202) upon a user touch at the touch screen display 38 at or near the text of the graphical user interface. Signals are sent from the touch-sensitive overlay 34 to the controller 36 when a touch from a suitable object such as a finger or other conductive object held in the bare hand of a user, is detected. Any change in the location of the touch is also detected based on the signals sent from the touch-sensitive overlay 34 to the controller 36. Thus, the X and Y location of the touch can be determined at any point during the touch event. The point of contact of the user's finger or conductive device held by the user with the touch screen display 38 can be taken as the location of touch or an offset from the point of contact can be taken as the location of touch. A predetermined offset can be used to compensate for a difference between an actual location of touch and a target location. A predetermined offset, for example, can be determined based on prior calibration of the actual location of touch and a target on the touch screen display 38.

Actuation of the switch 39 is then determined (step 204). The actuation of the switch results in a signal sent from the switch 39 to the processor 22. The actuation of the switch 39 is a result of application of a force sufficient to overcome the bias of the touch screen display 39 and the actuation force of the switch 39, as indicated above, thereby permitting the touch screen display 38 to move by pivoting or sliding toward the base. The location of the touch at the time of actuation of the switch 39 is determined.

Any change in the location of the touch while the switch 39 is maintained in the actuated state as a result of continued applied force on the touch screen display 38 and therefore continued depression of the touch screen display 38 toward the base 82 is determined (step 206). A selection indicator can be provided in the form of highlighting of the text from the location of the touch at the time of actuation of the switch 39 to and including the location during movement of the touch. Thus, an indicator of the text included for selection is provided prior to selection of the text, permitting the user to correct, if necessary, thereby reducing selection error.

Release of the switch 39 from actuation, permitting return of the switch from the depressed position to the rest position shown in Figure 2 is detected based on a signal from the switch 39 to the processor 22 (step 208). Thus, when the force applied to the touch screen display 38 is released or reduced a sufficient amount to permit movement of the touch screen display 38 back to the rest position into which it is biased, the switch 39 is released and this release is detected at the processor. The location of the touch at the time of release of the switch 39 is determined. Again, the point of contact of the user's finger or conductive device held by the user with the touch screen display 38 can be taken as the location of touch or an offset from the point of contact can be taken as the location of touch. A predetermined offset can be used to compensate for a difference between an actual location of touch and a target location. A predetermined offset, for example, can be determined based on prior calibration of the actual location of touch and a target location on the touch screen display 38. Touch contact with the touch screen display 38 may be maintained after release of the switch. Touch contact may also begin at some other location prior to actuation of the switch. The text, however, is selected based on the location of touch contact at the time of actuation and release of the switch 39.

The text located from the location of touch at the time of actuation to the location of touch at the time of release is selected upon release of the switch 39 when the location of touch upon release of the switch 39 differs from the location of touch upon actuation of the switch 39 (step 210). The selection of text can include text underlying the location of touch upon actuation and the location of touch upon release or only text between the location of touch upon actuation and the location of touch upon release.

The process shown and described with reference to Figure 3 is simplified for the purpose of the present explanation and other steps and substeps may be included. Alternatively, some of the steps and substeps may be excluded.

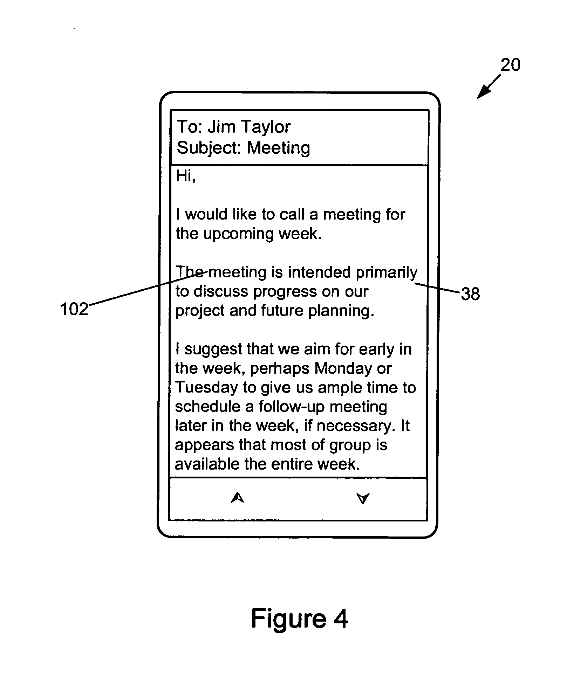

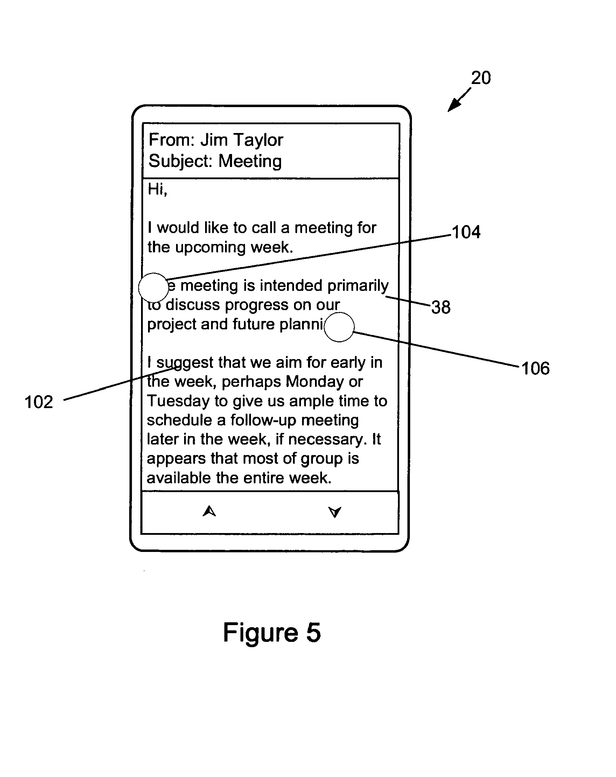

Reference is again made to Figure 3 and to Figures 4 to 6 to describe an example of the method of controlling the portable electronic device 20. In the exemplary screen shown in Figure 4, the touch screen display 38 includes text 102 in the form of a message and thus, the graphical user interface is rendered on the touch screen display 38 (step 200). It will be appreciated that the present disclosure is not limited to message text as other characters are possible as described. Further, the text can be from any suitable application and is not limited to the message application.

A touch on the touch screen display 38 is detected (step 202) upon a user touch at the touch screen display 38 at a point at or near the text 102 of the graphical user interface. Signals are sent from the touch-sensitive overlay 34 to the controller 36 when a when the touch is detected.

Actuation of the switch 39 is then determined (step 204). The switch 39 is actuated as a result of application of a force sufficient to overcome the bias of the touch screen display 39 and the actuation force of the switch 39, as indicated above. For the purpose of the present example, the location of touch at the time of actuation of the switch 39 is indicated by the numeral 104 and the location of the touch 104 at the time of actuation of the switch 39 is determined.

The user then moves his or her finger and the change in location of the touch while the switch 39 is maintained in the actuated state is determined (step 206) and text from the location of touch 104 at the time of actuation of the switch 39 to the moved location is highlighted to provide the user with an indication of the text included for selection prior to selection of the text.

Release of the switch 39 from actuation, is detected based on a signal from the switch 39 to the processor 22 (step 208) and the location of the touch at the time of release of the switch 39 is determined. For exemplary purposes, the location of touch at the time of release of the switch 39 is indicated by the numeral 106 and the location of touch 106 at the time of release of the switch is determined.

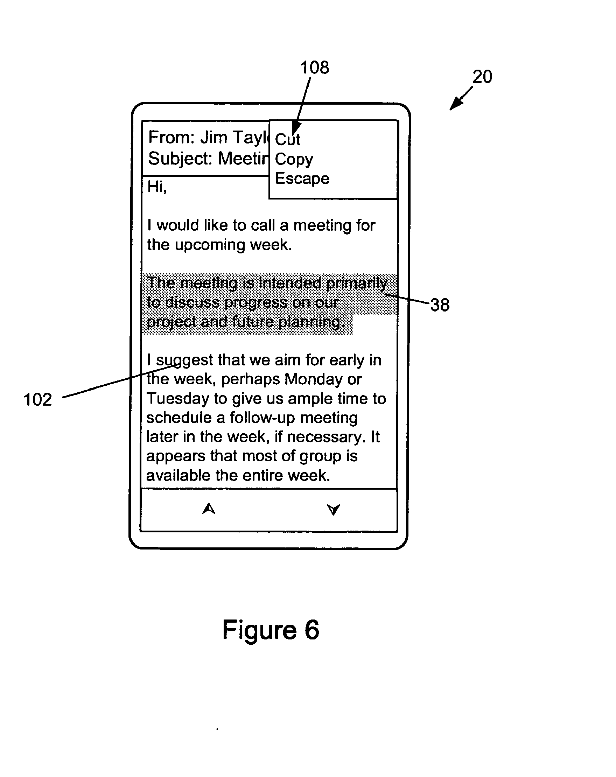

The text located from the location of touch 104 at the time of actuation to the location of touch 106 at the time of release is selected upon release of the switch 39. The selected text can be highlighted and an associated function can then be performed. For example, a menu list of options 108 can be provided, such as that shown in Figure 6, for selection of an operation to be performed on the text.

The control of the device permits selection of text and operation of functions on selected text as a whole. The text can be any suitable text from, for example, a message application, or any other suitable application. The text can include any characters including words, letters, numerals, punctuation, or symbols, for example. Functions such as cutting, copying, moving or deleting can be applied to the selected text as a whole by selecting the text in a single touch with sufficient force to actuate the switch and without requiring a second touch, for example, at another key or requiring rendering and selection of an option from a menu in order to select the text. This reduces the number of screens and menus as well as buttons required for rendering on the limited screen space of the portable electronic device, thereby saving time of device use, decreasing power requirements and increasing battery life. Further still, additional devices such as a scroll wheel, trackball or buttons are not required for selection on the touch screen display.

While the embodiments described herein are directed to particular implementations of the portable electronic device and the method of controlling the portable electronic device, it will be understood that modifications and variations may occur to those skilled in the art. All such modifications and variations are believed to be within the scope of the present disclosure.

## Claims

1. A method of controlling an electronic device (20) having a touch screen display (38), the touch screen display (38) being movable relative to a base (82) of the electronic device (20), the method comprising:
displaying selectable text on the touch screen display (38);
detecting a touch event on the touch screen display (38);
detecting actuation of a switch (39) caused by movement of the touch screen display (38) toward the base (82) during the touch event and determining a first location of touch at the time of actuation;
detecting release of the switch (39) and determining a second location of touch at the time of release of the switch (39); and
selecting text displayed on the touch screen display (38) between the first location of the touch and the second location of touch.

2. The method according to claim 1, comprising performing an associated function upon selection of said text.

3. The method according to claim 1, wherein performing said associated function comprises providing a menu list of options.

4. The method according to claim 1, comprising displaying highlighting over the text.

5. The method according to any one of the preceding claims, wherein the electronic device (20) is a portable electronic device.

6. An electronic device (20) comprising:
a base (82);
a touch screen display (38) moveable relative to the base (82);
a switch (39) disposed between the touch screen display (38) and the base (82) and actuable as a result of movement of the touch screen display (38) toward the base (82); and
a processor (22) connected to the touch screen display (38) and the switch (39), and a memory device (28, 30) for storage of computer-readable program code executable by the processor (22) to implement the steps of the method of any one of claims 1 to 5.

7. The electronic device according to claim 6, wherein the device (20) is a portable electronic device.

8. A computer-readable medium having computer-readable code embodied therein for execution by a processor (22) of an electronic device (20) to cause the electronic device (20) to implement the method of any one of claims 1 to 5.

## Patentansprüche

1. Ein Verfahren zu einem Steuern einer elektronischen Vorrichtung (20), die eine Touchscreen-Anzeige (38) hat, wobei die Touchscreen-Anzeige (38) bezüglich einer Basis (82) der elektronischen Vorrichtung (20) beweglich ist, wobei das Verfahren aufweist:
ein Anzeigen eines auswählbaren Textes auf der Touchscreen-Anzeige (38);
ein Erfassen eines Berührungsereignisses auf der Touchscreen-Anzeige (38);
ein Erfassen einer Betätigung eines Schalters (39), die durch eine Bewegung der Touchscreen-Anzeige (38) gegen die Basis (82) während des Berührungsereignisses verursacht wird, und ein Bestimmen eines ersten Orts einer Berührung zu der Zeit der Betätigung;
ein Erfassen eines Freigebens des Schalters (39) und ein Bestimmen eines zweiten Orts einer Berührung zu der Zeit der Freigabe des Schalters (39); und
ein Auswählen eines auf der Touchscreen-Anzeige (38) angezeigten Textes zwischen dem ersten Ort der Berührung und dem zweiten Ort der Berührung.

2. Das Verfahren gemäß Anspruch 1, das ein Ausführen einer assoziierten Funktion nach Auswahl des Textes aufweist.

3. Das Verfahren gemäß Anspruch 1, wobei ein Ausführen der assoziierten Funktion ein Vorsehen einer Menüliste von Optionen aufweist.

4. Das Verfahren gemäß Anspruch 1, das ein Anzeigen eines Hervorhebens über dem Text aufweist.

5. Das Verfahren gemäß einem der vorgehenden Ansprüche, wobei die elektronische Vorrichtung (20) eine tragbare elektronische Vorrichtung ist.

6. Eine elektronische Vorrichtung (20), die aufweist:
eine Basis (82);
eine Touchscreen-Anzeige (38), die gegenüber der Basis (82) beweglich ist;
einen Schalter (39), der zwischen der Touchscreen-Anzeige (38) und der Basis (82) angeordnet ist und als ein Ergebnis einer Bewegung der Touchscreen-Anzeige (38) gegen die Basis (82) betätigbar ist; und
einen Prozessor (22), der mit der Touchscreen-Anzeige (38) und dem Schalter (39) verbunden ist, und eine Speichervorrichtung (28, 30) zu einer Speicherung eines computerlesbaren durch den Prozessor (22) ausführbaren Programmcodes, um die Schritte des Verfahrens gemäß einem der Ansprüche 1 bis 5 auszuführen.

7. Die elektronische Vorrichtung gemäß Anspruch 6, wobei die Vorrichtung (20) eine tragbare elektronische Vorrichtung ist.

8. Ein computerlesbares Medium, das einen computerlesbaren Code darin verkörpert für eine Ausführung durch einen Prozessor (22) einer elektronischen Vorrichtung (20), der die elektronische Vorrichtung (20) veranlasst, das Verfahren gemäß einem der Ansprüche 1 bis 5 auszuführen.

## Revendications

1. Procédé pour commander un dispositif électronique (20) comportant un dispositif d'affichage à écran tactile (38), le dispositif d'affichage à écran tactile (38) étant mobile par rapport à une base (82) du dispositif' électronique (20), le procédé comprenant :
l'affichage d'un texte pouvant être sélectionné sur le dispositif d'affichage à écran tactile (38) ;
la détection d'un évènement de toucher sur le dispositif d'affichage à écran tactile (38) ;
la détection d'un actionnement d'un commutateur (39) provoqué par un mouvement du dispositif d'affichage à écran tactile (38) vers la base (82) durant l'évènement de toucher et la détermination d'un premier emplacement de toucher au moment de l'actionnement ;
la détection d'un relâchement du commutateur (39) et la détermination d'un deuxième emplacement de toucher au moment du relâchement du commutateur (39) ; et
la sélection d'un texte affiché sur le dispositif d'affichage à écran tactile (38) entre le premier emplacement du toucher et le deuxième emplacement de toucher.

2. Procédé selon la revendication 1, comprenant la réalisation d'une fonction associée lors de la sélection dudit texte.

3. Procédé selon la revendication 1, dans lequel la réalisation de ladite fonction associée comprend la délivrance d'une liste d'options de menu.

4. Procédé selon la revendication 1, comprenant l'affichage d'une surbrillance sur le texte.

5. Procédé selon l'une quelconque des revendications précédentes, dans lequel le dispositif électronique (20) est un dispositif électronique portable.

6. Dispositif électronique (20), comprenant :
une base (82) ;
un dispositif d'affichage à écran tactile (38) mobile par rapport à la base (82) ;
un commutateur (39) disposé entre le dispositif d'affichage à écran tactile (38) et la base (82), et pouvant être actionné en résultat du mouvement du dispositif d'affichage à écran tactile (38) vers la base (82) ; et
un processeur (22) connecté au dispositif d'affichage à écran tactile (38) et au commutateur (39), et un dispositif de mémoire (28, 30) pour la mémorisation d'un code de programme lisible par un ordinateur pouvant être exécuté par le processeur (22) de façon à mettre en oeuvre les étapes du procédé selon l'une quelconque des revendications 1 à 5.

7. Dispositif électronique selon la revendication 6, dans lequel le dispositif (20) est un dispositif électronique portable.

8. Support lisible par un ordinateur comportant un code lisible par un ordinateur incorporé à l'intérieur de celui-ci pour l'exécution par un processeur (22) d'un dispositif électronique (20), de façon à faire mettre en oeuvre par le dispositif électronique (20) le procédé selon l'une quelconque des revendications 1 à 5.
